# EUROPEAN PATENT APPLICATION

(11) **EP 2 407 433 A1**
(43) Date of publication of application: **18.01.2012**
(21) Application number: 10305786.5
(22) Date of filing: 15.07.2010
(51) Int. Cl.: C02F 3/10, C02F 3/34, B09B 3/00

(54) **Methods for the inactivation of antibiotics**

(71) Applicant: Da Volterra, 75011 Paris (FR)
(72) Inventor: DE Gunzburg, Jean, London, SW7 3AT (GB); Bensoussan, Claude, 75011, Paris (FR)
(74) Representative: Sekhri, Redha

(57) **Abstract**

The invention relates to methods for inactivating antibiotics in the environment. The invention further relates to the use of a laccase, a lipase or a cellulase for inactivation of antibiotics. It also relates to compositions to decontaminate the polluted environment and to prevent the pollution of the environment by inactivating antibiotics from waste and wastewater effluents before they reach the environment.

## Description

The invention relates to methods for inactivating antibiotics in the environment. The invention further relates to the use of a laccase, a lipase or a cellulase for inactivation of antibiotics. It also relates to compositions to decontaminate the polluted environment and to prevent the pollution of the environment by inactivating antibiotics from waste and wastewater effluents before they reach the environment.

### Background of the invention

Antibiotics have been excessively used in man and animals since the Second World War, leading to the emergence of resistant strains. This generalization of resistance to antibiotics in bacteria populations is the result of a selection pressure following prolonged and/or repeated exposure of these populations to antibiotics. Antibiotic resistance is a growing problem in the world today (Levy 1998). Alarming consequences have been observed, since more and more cases of death from multi-resistant infections have been reported. Thus, antibiotic resistant strains of pathogenic bacteria emerge every day and represent a significant health care challenge. Bacterial resistance was not considered a major public health issue as such as long as the pharmaceutical industry was discovering new antibiotics with increased activity (Shlaes et al. 2004). However, while bacterial resistance was continuously increasing as a result of antibiotic usage in human and veterinary medicine as well as in farms and in agriculture, the industrial antibiotic pipeline has progressively dried up (Morel and Mossialos 2010). Sometimes, bacteria isolated from patients are resistant to most -if not all- antibiotics not only in the hospital (Tacconelli et al. 2009) but also in the community (Nguyen et al. 2010). Thus, we now face a situation where antibiotics have to be considered as limited resources which should be preserved.

Furthermore, it is now proven that antibiotics are also environmental pollutants which can generate new pools of resistance which may further dramatically disseminate in the environment by inter-species transfer (Xi et al. 2009). There are confirmed evidences that soils and waters are polluted by antibiotics in various environmental settings (Segura et al. 2009; Baquero et al. 2008). The main sources of environmental release of antibiotics are drug manufacturing facilities, animal farms, hospitals and human waste waters.

Some families of antibiotic drugs are clearly persistent in the environment and the consequences are dramatic. For example, Hektoen et al. (1995) reports that there is no degradation of oxytetracycline or oxolanic acid after 180 days in marine sediments. In Boxall et al. (2005), the same oxytetracycline is shown to persist in waters until 42-46 days. In Winckler & Grafe (2001), only 50% of initial tetracycline is degraded after 55 days in pig manure.

Alarming reports on the impact of antibiotic pollution in the environment on wild animals have been published. For example, antibiotics were found in the blood of three different species of avian scavengers in Spain with a high mortality rate directly linked to the presence of antibiotics (Lemus et al. 2008). Resistant bacteria of human origin were also found in yellow-lugged gulls in the south of France (Bonnedahl et al. 2009).

Elimination of antibiotics from the environment is thus a major concern as they could cause the development of more resistance in the environment, and this resistance may increasingly be transferred to bacteria pathogenic to humans, leading to potential multi-resistant infections, septic shock and death.

There is therefore a clear need for removal of antibiotics at the source of pollution.

Some approaches have been described for destroying antibiotics in the environment, but their application at the source of pollution is complex. Ozonation and ultra-violet irradiation have been proposed, but their use is hampered by their cost, uneasy implementation at the source of pollution, poor efficiency on some compounds and by the fact that they can generate degradation products with toxic properties in some situations.

Therefore, there is still a strong need for urgent development of a method for eliminating the adverse effects of antibiotics in the environment, directly at the source of pollution. In particular, there is a need for providing an efficient means to inactivate cycline antibiotics, amongst which tetracycline, which are particularly persistent in the environment.

### Summary of the invention

The invention provides the use of one or several enzymes selected in the group consisting of a laccase, a lipase and a cellulase, for inactivating one or several antibiotics (i.e. an antibiotic or a mixture of antibiotics). In a particular embodiment, the laccase is from *Trametes versicolor* (formerly known as *Coriolus versicolor).* In another embodiment, the laccase is used for inactivating an antibiotic selected from the cycline family or the beta-lactam family. Representative cyclines include tetracycline, oxytetracycline and chlortetracycline. Amoxicillin and imipenem are representative beta-lactams.

The use of one or more antibiotic-inactivating enzymes to prevent environmental pollution by antibiotics and/or for antibiotic remediation in the environment or in waste is also disclosed. Specifically, the invention relates to the use of at least one enzyme selected in the group consisting of a laccase, a lipase and a cellulase for antibiotic remediation in the environment or in waste. Said enzymes can be used alone or in combination with one or more other antibiotic-inactivating enzymes. Representative enzymes which could be combined are a ketoreductase, and/or a beta-lactamase and/or an erythromycin esterase, for example.

The invention also provides an enzymatic method for inactivating antibiotics in the environment, comprising bringing into contact an environment setting to be treated with one or more antibiotic-inactivating enzymes. As such, the invention relates in particular to a method for the enzymatic treatment of an environment setting, comprising treating said environment setting with at least one enzyme selected in the group consisting of a laccase, a lipase and a cellulase, said selected enzyme being used alone or in combination with one or more other antibiotic-inactivating enzymes, thereby inactivating antibiotics present in said environment setting.

The invention further provides methods for preventing antibiotic pollution of the environment by inactivating antibiotics in waste and effluents contaminated with antibiotics, prior to their rejection into the environment. Accordingly, the invention also relates to a method for the enzymatic remediation of waste material or effluent before it reaches the environment, comprising bringing said waste material or effluent into contact with at least one enzyme selected in the group consisting of a laccase, a lipase and a cellulase, alone or in combination with one or more antibiotic-inactivating enzymes, thereby inactivating antibiotics present in said waste material or effluent.

In a particular embodiment, the other antibiotic inactivating enzyme(s) used in combination with the laccase, lipase or cellulase as provided above are selected in the group consisting of a ketoreductase, a beta-lactamase and an erythromycin-esterase.

The uses and methods of the invention are particularly useful for decontaminating environment settings like soils or waters. In a particular embodiment, waters to be depolluted are surface waters like rivers or lakes, ground waters, underground waters or collected waters destined to human or animal use. Representative soils include industrial soils, farm soils or agricultural soils.

The uses and methods of the invention are also useful for decontaminating wastes that are polluted by antibiotic before they reach the environment. In a particular embodiment, wastes to be treated are industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical centre wastewater, nursing home wastewater, urban wastewater, collective wastewater, wastewater treatment plant effluents or agricultural manure.

The invention also provides a composition comprising
- at least one enzyme selected in the group consisting of a laccase (e.g. a laccase from *T. versicolor),* a lipase and a cellulase; and
- at least one other enzyme that inactivates an antibiotic.

The composition can be used in the methods of the invention. In a particular embodiment, the composition according to the invention further comprises at least one other enzyme selected in the group consisting of a ketoreductase, a beta-lactamase and an erythromycin-esterase. In one aspect of this embodiment, the composition comprises a laccase, a ketoreductase, a cellulase, a lipase, a beta-lactamase and an erythromycin-esterase.

The composition of this aspect can advantageously be used in the methods of the invention for inactivating a wide range of antibiotic classes. Accordingly, the laccase can be used for at least inactivating cycline antibiotics (e.g., tetracycline, oxytetracycline or chlortetracycline) and beta-lactam antibiotics comprising penicillin (e.g. amoxicillin), cephalosporin (e.g. cefdinir) and/or carbapenem (e.g. imipenem) antibiotics. The lipase can be used for inactivating at least macrolide antibiotics (e.g. erythromycin) or inactivating beta-lactam antibiotics (e.g. amoxicillin). The ketoreductase can be used for inactivating at least beta-lactam (e.g. amoxicillin or imipenem). The beta-lactamase can be used for inactivating beta-lactam antibiotics (e.g. penicillins, cephalosporins, cephamycins or carbapenems).The erythromycin-esterase can be used for inactivating at least macrolides (e.g. erythromycin or clarithromycin).

Further objects and applications will become apparent in the following detailed description of the invention.

### Detailed description of the invention

### Definitions

According to the present invention, the terms "inactivation of an antibiotic" and variations thereof denote the total or partial reduction of the efficiency of an antibiotic. The inactivation of an antibiotic may be assessed according to tests well known to one skilled in the art. For example, one can determine the minimal inhibitory concentration (MIC) of an antibiotic before and after its treatment by the presence of a test molecule, and in particular an enzyme. A molecule, e.g. an enzyme, which is able to substantially increase the MIC of an antibiotic in comparison to the MIC obtained without the said enzyme is then termed "an antibiotic-inactivating enzyme".

According to the present invention, an inactivation is total if growth of bacteria, sensitive to a certain concentration of a given antibiotic, in the presence of said concentration of the antibiotic after its treatment with the inactivating enzyme, is identical to growth in the absence of the antibiotic. Another definition of total inactivation is when the MIC of an antibiotic for sensitive bacteria is increased by at least 2 orders of magnitude after treatment with the inactivating enzyme.

### Uses of the invention

The invention thus relates to the use of at least one enzyme selected in the group of a laccase, a lipase and a cellulase, for the inactivation of antibiotics. The inventors have shown that these enzymes have the surprising ability to inactivate antibiotics. These advantageous properties of laccases, lipases and cellulases have never been disclosed in the art.

Laccase has been shown by the inventors to be effective at inactivating at least cycline and beta-lactam antibiotics. In particular, tetracycline, oxytetracycline, chlortetracycline, amoxicillin and imipenem are totally inactivated by laccase. Accordingly, in a particular embodiment, the invention relates to the use of laccase for the inactivation of each of these antibiotic families and specific antibiotics.

These properties are of particular interest since laccase is an enzyme readily available, produced at the industrial scale for a number of different applications (Mayer and Staples 2002; Torres et al. 2003; Couto and Herrera 2006). Furthermore, the inventors have shown that laccase efficiently inactivate cyclines, in particular tetracycline. These antibiotics are extremely resistant as they can persist in the environment, for up to 5 months in the case of tetracycline. Hence, there was a need for identification of means to inactivate cyclines, which is exactly what the inventors have identified and disclose in the present invention.

Laccases are enzymes that catalyze the oxidation of a substrate with dioxygen. Such enzymes are known from microbial, plant and animal origins (Thurston 1994; Baldrian 2006).

According to the present invention, any laccase enzyme comprised in the enzyme classification EC 1.10.3.2 as set out by the Nomenclature Committee of the International Union of Biochemistry and Molecular Biology (IUBMB), or any fragment derived there-from exhibiting laccase activity, may be used.

The enzymes may be derived from plants, bacteria or fungi (including filamentous fungi and yeasts).

Suitable examples from plants include *Rhus vernicifera* or *Acer pseudoplatanus L.* Suitable examples from fungi include laccases derivable from a strain of *Aspergillus, Neurospora,* e.g., *N. crassa, Podospora, Botrytis, Collybia, Fomes, Lentinus, Pleurotus, Trametes,* e.g., *T. villosa* and *T. versicolor, Rhizoctonia,* e.g., R. *solani, Coprinus,* e.g., C. *cinereus, C. comatus, C. friesii,* and C. *plicatilis, Psathyrella,* e.g., *P. condelleana, Panaeolus,* e.g., *P. papilionaceus, Myceliophthora,* e.g., M. *thermophila, Schytalidium,* e.g., S. *thermophilum, Polyporus,* e.g., *P. pinsitus, Phlebia,* e.g., *P. radita,* or *Coriolus,* e.g., C. *hirsutus* and C. *versicolor.*
Suitable examples from bacteria include laccases derivable from a strain of *Bacillus, e.g., B. Sphaericus, B. Subtilis and B. Halodurans, Pseudomonas, e.g., P. Fluorescens, P. Maltophila, P. Putida, P. Syringae and P. Aerophilum, Streptomyces, e.g. S. Antibioticus, S. Griseus, Aquifex Aeolicus, Azospirillum Lipoferum, Escherichia Coli, Leptothrix dicophora, Marinomonas mediterranea, Oceanobacillus iheyensis, Thermus thermophilus, Xanthomonas campesteris.* Preferred laccase enzymes are enzymes of fungal origin.

In a preferred embodiment, the laccase of the invention is a fungal laccase, preferably from *Trametes versicolor* (previously known as *Coriolus versicolor). T. versicolor* produces several enzymes carrying laccase activity, principally laccase 2, laccase 4, laccase 5 and laccase III, which are identified in the Uniprot protein database by accession numbers Q12718 (amino acid sequence shown in SEQ ID NO:1), Q12719 (amino acid sequence shown in SEQ ID NO:2), Q12717 (amino acid sequence shown in SEQ ID NO:3), and Q8TFM1 (amino acid sequence shown in SEQ ID NO:4) respectively. They are distinct enzymes of respectively 519, 520, 527 and 520 amino acids that are secreted by the organism. Laccase 2 shares 67% amino acid identity with laccase 4, 69% with laccase 5, and 78% with laccase III; laccases 4 and 5 share 75% amino acid identity, while laccase III shares 70% aminoacid identity with laccases 4 and 5. In the present invention, the implemented laccase may consist of one or several of the enzymes with laccase activity secreted by *T. versicolor,* in particular one of laccases 2, 4, 5 and III, any combination of 2 enzymes or 3 enzymes, or the four of them. Accordingly, the invention relates also to the implementation of a laccase or a mixture of laccases from *T. versicolor.* The invention also relates to the implementation of a mixture of laccases of different origins.

The laccase may be one which is producible by a method comprising cultivating a host cell transformed with a recombinant DNA vector which carries a DNA sequence encoding said laccase as well as DNA sequences encoding functions permitting the expression of the DNA sequence encoding the laccase, in a culture medium under conditions permitting the expression of the laccase enzyme, and recovering the laccase from the culture.

Laccase activity may be determined from the oxidation of syringaldazin under aerobic conditions. The violet colour produced is measured spectrophotometrically at 530 nm. The analytical conditions are 19 mM syringaldazine, 23 mM acetate buffer, pH 5.5, 30°C, 1 min. reaction time. 1 laccase unit (LACU) is the amount of enzyme that catalyses the conversion of 1.0 mmol syringaldazine per minute under these conditions.

Laccase activity may further be assessed according to the process described in the examples, using an antibiotic as a substrate. Of course, one skilled in the art can adapt this process using different laccases, antibiotics or bacterial strains. In a particular embodiment, the process used to assess laccase activity implements an antibiotic selected in the group consisting of tetracycline, oxytetracycline, chlortetracycline, amoxicillin and imipenem.

Cellulase refers to a class of enzymes that catalyze the cellulolysis (or hydrolysis) of cellulose. Cellulases are mainly produced by fungi, bacteria, and protozoans However, there are also cellulases produced by other types of organisms such as plants and animals. The EC number for this group of enzymes is EC 3.2.1.4. The cellulase enzymes usable in the present invention are preferably from *Trichoderma reesei.* According to a particular embodiment of the invention, the cellulase is a *Trichoderma reesei* cellulase. Such a cellulase can be produced using a submerged fermentation of a selected strain. Representative cellulases commercially available are CX40L and CX53L cellulases marketed by Genencor.

Cellulase has been shown by the inventors to be effective at inactivating at least cycline antibiotics. In particular, tetracycline, oxytetracycline and chlortetracycline are inactivated by cellulase. Accordingly, in a particular embodiment, the invention relates to the use of cellulase for the inactivation of each of these antibiotic families and specific antibiotics.

Again, these properties are of particular interest since the inventors have shown that cellulase efficiently inactivates cyclines, in particular tetracycline. As mentioned above, these antibiotics are extremely resistant and identification of enzymes able to inactivate antibiotics of this class is a considerable advance in the field.

Lipases (triacylglycerol, acylhydrolase, E.C. 3.1.1.3) are part of the family of hydrolases that act on carboxylic ester bonds. They have emerged as key enzymes in swiftly growing biotechnology, owing to their multi-faceted properties, which find usage in a wide array of industrial applications, such as food technology, detergent, chemical industry and biomedical sciences (Seitz et al. 1974; Hasan et al. 2006).

A number of lipases have been produced commercially, with the majority of them originating from bacteria *(Achromobacter spp., Alcaligenes sp., Arthrobacter sp., Pseudomonas sp., Staphylococcus sp., and Chromobacterium sp.) and fungi (Aspergillus niger, Candida cylindracea, Humicola lanuginosa, Mucor miehei, Rhizopus arrhizus, R. delemar, R. japonicus, R. niveus* and R. *oryzae)* (White and White 1997, Kazlauskas et al. 1998, Jaeger & Retz 1998, Lawson et al. 1994, Borckerhoff et al. 1974 and Godfredson et al. 1990).

The tridimensional crystal structures of some lipases have been published to date and many similarities in structure have been demonstrated (Huang et al. 1984, Brad and Brzozowski 1990, Schrag et al. 1991, Grochulski et al. 1993, Noble et al. 1993). The lipase-active site is covered by a short amphipathic helix or 'lid' of two nearly parallel amphiphathic helices The catalytic residues consist in the triad Ser...His...Asp/Glu that do not occur in fixed order in the protein sequence of the various lipases; amongst these residues, the catalytic serine in lipases is usually identified by the conserved sequence G×S×G (Brad and Brzozowski 1990). Many lipases are synthesized as precursors containing a signal peptide, that is then cleaved upon secretion of the mature protein. For instance, the lipase from *Pseudomonas cepacia* (also called *Bulkholderia cepacia)* is a 364 amino-acid protein comprising a signal peptide of 44 residues (Joergensen et al. 1991). Lipases exhibit a wide range of properties depending on their sources with respect to positional specificity, fatty acid specificity, thermostability, pH optimum, etc. They catalyse esterification, inter esterification, acidolysis, alcoholysis and aminolysis in addition to the hydrolytic activity on triglycerides (Hasan et al. 2006).

Regarding their huge biotechnological potential as catalysts (Reetz et al. 2002), lipases are the most used enzymes in synthetic organic chemistry, catalysing the chemo, regio- and/or stereoselective hydrolysis of carboxylic acid esters or the reverse reaction in organic solvents (Koeller et al. 2001 and Klibanov 2001). Some of these lipases' performances have been optimized by random mutagenesis and genetic engineering (Jaeger and Reetz. 1998, Han et al. 2004, Pleiss et al. 2000), directed evolution methods (Hasan et al. 2006) or through enzyme engineering (Lu et al. 2008, Palomo et al. 2004, Kimura et al. 1983, Kang et al. 1988).

Lipases are already used in wastewater treatments of complex effluents, but not for antibiotic remediation. Lipases are used in activated sludge and aerobic waste processes, where layers of fats must be removed from the surface of aerated tanks (Bailey and Ollis 1986) or to treat fat-rich effluent from agro-alimentary factories (Godfrey and Reichelt 1983).

Enzymatic Assay Method for lipase activity is often done by test kits available from major chemical suppliers. Some are based on enzymatic clearing of an emulsion where the decrease in absorbance values can be used to determine lipase activity in samples. Others are based on the titrimetric determination of fatty acids released from olive oil triacylglycerols using thymolphthalein for the end point indication. Alternatively, the formation of a quinone di-imine dye may be monitored (Ciuffreda et al. 2003).

The inventors have shown that lipase is effective at inactivating at least macrolide and beta-lactam antibiotics. Accordingly, in a particular embodiment, the invention relates to the use of lipase for the inactivation of antibiotics from each of these families. In particular, erythromycin and amoxicillin are inactivated by lipase. Accordingly, the invention relates to the use of lipase for the inactivation of each of these antibiotics.

In a particular embodiment of the invention, the lipase used is selected in the group consisting of *Achromobacter spp.* lipase, *Alcaligenes spp.* AS2 lipase, *Pseudomonas cepacia* (also called *Bulkholderia cepacia)* P1 lipase and *Pseudomonas stutzeri* lipase. According to a preferred embodiment, the lipase is that originating from *Achromobacter* spp.

According to a particular embodiment, the invention relates to the use of at least one enzyme selected in the group consisting of a laccase, a lipase and a cellulase, as defined above, along with at least one other antibiotic-inactivating enzyme. Representative other antibiotic-inactivating enzymes that may be used in the present invention include, but are not limited to, an erythromycin-esterase, a beta-lactamase or a ketoreductase.

Erythromycin-esterase (EC number 3.1.1) refers to a class of enzymes that catalyze the inactivation of erythromycin as well as other macrolide antibiotics. These enzymes hydrolyze the lactone ring of macrolides such as erythromycin and oleandomycin as explained in Barthelemy et al. 1984.

Known erythromycin-esterases are of bacterial origins. They are produced for example by *Escherichia coli, Halobacterium salinarum, Gramella forsetii, Achromobacter denitrificans* or *Rhodococcus* sp. In a particular embodiment, the preferred erythromycin-esterase is one of the enzymes usually produced by members of the family Enterobacteriaceae highly resistant to erythromycin as described in Arthur et al. 1987.

Two erythromycin-esterases from *E.coli* have been documented under the reference names EreA and EreB, the use of both of which being envisioned in the present invention. In a preferred embodiment of the invention, the erythromycin-esterase is the EreB erythromycin-esterase from *E.coli* (cf. Arthur et al. 1986).

The erythromycin-esterase may be one which is producible by a method comprising cultivating a host cell transformed with a recombinant DNA vector which carries a DNA sequence encoding said erythromycin-esterase as well as DNA sequences encoding functions permitting the expression of the DNA sequence encoding the erythromycin-esterase, in a culture medium under conditions permitting the expression of the erythromycin-esterase enzyme, and recovering the erythromycin-esterase from the culture.

Beta-lactamases are enzymes (EC 3.5.2.6) produced by some bacteria and are responsible for their resistance to beta-lactam antibiotics like penicillins, cephalosporins, cephamycins, and carbapenems. These antibiotics have a common element in their molecular structure: a four-atom ring known as a beta-lactam ring. The lactamase enzyme breaks that ring open, deactivating the molecule's antibacterial properties. This class of enzymes is well known to those skilled in the art (Wang et al., 1999; Frère, J.M. 1995). Based on their catalytic mechanisms, two large categories of beta-lactamases can be distinguished: those containing a catalytic serine residue, and those containing Zinc ions in their catalytic site, also called metallo-beta-lactamases. Beta lactamases have also been subdivided into four classes according to similarities in their primary sequence; enzymes of classes A, B and D comprise a catalytic serine in their active site, whereas class B enzymes are metallo-enzymes. To date, this vast family comprises more that 500 distinct enzymes; the selective pressure exerted on bacteria by antibiotic treatments rapidly favours the spread of beta-lactamase expression amongst opportunistic and pathogenic bacteria, as well as their evolution towards forms that have extended spectrum of substrates (Extended Spectrum Beta-lactamases, or ESBL) i.e. that can hydrolyse all classes of beta-lactams including carbapenbems, and that are resistant to current beta-lactamase inhibitors such as clavulanic acid, sulbactam or tazobactam.

Ketoreductase (KRED) or carbonyl reductase class (EC 1.1.1.184) enzymes are useful for the synthesis of optically active alcohols from the corresponding prochiral ketone substrate. KREDs typically convert a ketone substrate to the corresponding alcohol product, but may also catalyze the reverse reaction, oxidation of an alcohol substrate to the corresponding ketone/aldehyde product. The reduction of ketones and the oxidation of alcohols by enzymes such as KRED requires a co-factor, most commonly reduced nicotinamide adenine dinucleotide (NADH) or reduced nicotinamide adenine dinucleotide phosphate (NADPH), and nicotinamide adenine dinucleotide (NAD) or nicotinamide adenine dinucleotide phosphate (NADP) for the oxidation reaction. NADH and NADPH serve as electron donors, while NAD and NADP serve as electron acceptors. It is frequently observed that ketoreductases and alcohol dehydrogenases accept either the phosphorylated or the non-phosphorylated co-factor (in its oxidized and reduced state), but not both.

KRED enzymes can be found in a wide range of bacteria and fungi (for reviews: Kraus and Waldman 1995; Faber et al. 2000; Hummel and Kula, 1989). Several KRED gene and enzyme sequences have been reported, e.g., *Candida magnoliae* (Genbank accession BAB21578.1 GI:12657577) *Candida parapsilosis* (Genbank accession BAA24528.1 GI:2815409), *Sporobolomyces salmonicolor* (Genbank accession AAB22639.1 GI:251982).

Representative KRED enzymes which can be used in the present invention are those available from Codexis, Inc. (Redwood City, CA 94063, USA) in the formulation of the kit under the reference KRED-NADH-12000. This kit contains lyophilisates of several NADH-dependent Ketoreductase enzymes with protocol and Recycle Mix that includes cofactor, cofactor recycling enzyme and buffer. Among those KREDs enzymes, KRED-NADH-101, KRED-NADH-102, KRED-NADH-108, KRED-NADH-110, KRED-NADH-126 are of particular interest since they are able to completely inactivate beta-lactam compounds as shown herein.

### Compositions and devices of the invention

The invention further provides a composition comprising one or more antibiotic inactivating enzymes.

In a particular embodiment, the composition of the invention comprises
- at least one enzyme selected in the group consisting of a laccase (e.g., from T. *versicolor),* a lipase (e.g., from *Achromobacter spp.)* and a cellulase (e.g., from *Trichoderma reesei)* as defined above, and
- at least one other antibiotic-inactivating enzyme.

For example, the other antibiotic-inactivating enzyme can be selected in the group consisting of a ketoreductase, a beta-lactamase and an erythromycin-esterase, as defined above. In one aspect of this embodiment, the composition comprises at least:
- a laccase and a lipase, or
- a laccase and a cellulase, or
- a lipase and a cellulase.

In a particular embodiment, the composition comprises a laccase, a cellulase, a lipase, a ketoreductase, a beta-lactamase and an erythromycin-esterase. The composition of this aspect can advantageously be used in the method of the invention for inactivating a wide range of antibiotic classes as is apparent from the above. Accordingly, the laccase is used at least for inactivating cycline (e.g., tetracycline, oxytetracycline or chlortetracycline), penicillin (e.g. amoxicillin), cephalosporin (e.g. cefdinir) and/or carbapenem (e.g. imipenem) antibiotics. The lipase is used at least for inactivating macrolide antibiotics (e.g. erythromycin) or inactivating beta-lactam antibiotics (e.g. amoxicillin). The ketoreductase is used at least for inactivating beta-lactams (e.g. amoxicillin or imipenem). The cellulase is used at least for inactivating cycline (e.g., tetracycline, oxytetracycline or chlortetracycline). The beta-lactamase is used for inactivating beta-lactam antibiotics (e.g. penicillins, cephalosporins, cephamycins or carbapenems). The erythromycin-esterase is used for at least inactivating macrolides (e.g. erythromycin or clarithromycin).

In different aspects, the composition of the invention comprises:
- one enzyme selected in the group consisting of a laccase, a cellulase and a lipase, and comprises a supplementary erythromycin-esterase,
- one enzyme selected in the group consisting of a laccase, a cellulase and a lipase, and comprises a supplementary ketoreductase,
- one enzyme selected in the group consisting of a laccase, a cellulase and a lipase, and comprises a supplementary beta-lactamase,
- one enzyme selected in the group consisting of a laccase, a cellulase and a lipase, and comprises a supplementary ketoreductase and an erythromycin esterase,
- one enzyme selected in the group consisting of a laccase, a cellulase and a lipase, and comprises a supplementary ketoreductase and a beta-lactamase
- one enzyme selected in the group consisting of a laccase, a cellulase and a lipase, and comprises a supplementary ketoreductase, a beta-lactamase and an erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase,
- two enzymes selected in the group consisting of a laccase, a cellulase and a lipase (e.g., a laccase and a lipase, or a laccase and a cellulase, or a lipase and a cellulase), and optionally comprises a supplementary beta-lactamase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase and an erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase and a beta-lactamase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase, a beta-lactamase and an erythromycin esterase,
- a laccase, a lipase and a cellulase,
- a laccase, a lipase, a cellulase and a ketoreductase,
- a laccase, a lipase, a cellulase and an erythromycin esterase,
- a laccase, a lipase, a cellulase and a beta-lactamase,
- a laccase, a cellulase, a lipase, a ketoreductase and an erythromycin-esterase,
- a laccase, a cellulase, a lipase, a ketoreductase and a beta-lactamase
- a laccase, a cellulase, a lipase, a ketoreductase, a beta-lactamase and an erythromycin-esterase.

In one embodiment of the invention, the antibiotic-inactivating enzyme(s) can be formulated as a liquid (for example aqueous), a solid, a gel, a paste or a dry product formulation. The dry product formulation may subsequently be re-hydrated to form an active liquid or semi-liquid formulation usable in the methods of the invention.

The composition according to the invention can comprise a carrier suitable for the intended formulation. The composition of the invention may further comprise auxiliary agents such as wetting agents, thickening agents, buffer, stabilisers, fragrance, colorants, fillers and the like.

The composition of the invention may be a concentrated product or a ready-to-use product. In use, the concentrated product is typically diluted with water or any other suitable diluents to provide a liquid composition having effective antibiotic-inactivating properties, applied to the effluent to be depolluted, and allowed to react with the antibiotic(s) present in this effluent.

When formulated as a liquid product, the composition of the invention can comprise a buffer with adjusted pH to ensure a proper conservation of the enzymatic activity. Such a buffer should be preferably protease-free and present a neutral pH. The formulation may be kept at 4°C until use to avoid degradation of products.

The composition can contain purified enzymes or crude enzymes as the desired enzymatic activity does not require total purity of the product. A specific composition can contain equivalent or distinct quantities of the enzymes selected amongst the enzyme families detailed above.

The invention also provides a solid support comprising at least one antibiotic-inactivating enzyme immobilized thereon. In one embodiment, at least one enzyme selected in the group consisting of a laccase (e.g., from *T. versicolor),* a lipase (e.g., from *Achromobacter spp.)* and a cellulase (e.g., from *Trichoderma reesei),* as defined above, is immobilized on said solid support. In one aspect of this embodiment, the solid support of the invention further comprises at least one further immobilized enzyme, in particular a supplementary enzyme selected in the group consisting of a ketoreductase, a beta-lactamase and an erythromycin-esterase. In different aspects of this embodiment, the solid support comprises:
- one enzyme selected in the group consisting of a laccase, a cellulase and a lipase, and comprises a supplementary erythromycin-esterase,
- one enzyme selected in the group consisting of a laccase, a cellulase and a lipase, and comprises a supplementary ketoreductase,
- one enzyme selected in the group consisting of a laccase, a cellulase and a lipase, and comprises a supplementary beta-lactamase,
- one enzyme selected in the group consisting of a laccase, a cellulase and a lipase, and comprises a supplementary ketoreductase and an erythromycin esterase,
- one enzyme selected in the group consisting of a laccase, a cellulase and a lipase, and comprises a supplementary ketoreductase and a beta-lactamase,
- one enzyme selected in the group consisting of a laccase, a cellulase and a lipase, and comprises a supplementary ketoreductase, a beta-lactamase and an erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase,
- two enzymes selected in the group consisting of a laccase, a cellulase and a lipase (e.g., a laccase and a lipase, or a laccase and a cellulase, or a lipase and a cellulase), and optionally comprises a supplementary beta-lactamase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase and an erythromycin esterase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase and a beta-lactamase,
- two enzymes selected in the group consisting of a laccase, a cellulase and a lipase (e.g., a laccase and a lipase, or a laccase and a cellulase, or a lipase and a cellulase), and optionally comprises a supplementary ketoreductase, a beta-lactamase and an erythromycin esterase,
- a laccase, a lipase and a cellulase,
- a laccase, a lipase, a cellulase and a ketoreductase,
- a laccase, a lipase, a cellulase and an erythromycin esterase,
- a laccase, a lipase, a cellulase and a beta-lactamase,- a laccase, a cellulase, a lipase, a ketoreductase and an erythromycin-esterase,
- a laccase, a cellulase, a lipase, a ketoreductase and a beta-lactamase,
- a laccase, a cellulase, a lipase, a ketoreductase, a beta-lactamase and an erythromycin-esterase.

Several techniques can be used to immobilize enzymes on solid supports, and are well-known by those skilled in the art. They are mainly based on chemical and physical mechanisms. One can refer to Zaborsky et al. (1974). Detailed information on enzyme immobilization, and more specifically on laccase immobilization, can also be found in Duran et al. (2002).

Said solid supports can include adsorbent materials such as activated carbon, resins or porous materials like macro-porous polymer materials. In a particular embodiment of the invention, said solid support is CPC-silica beads or porous glass beads as described in Champagne et al. (2010).

In another embodiment, said solid support is a membrane to which the enzyme is immobilized by covalent linkage such as described in Jolivalt et al. (2000). For example, said membrane can be a microfiltration membrane.

The enzymes of the composition can also be immobilized by gel entrapment as described in Avnir et al. (1994). The commonly used entrapment media include polyacrylamide, calcium alginate, and gelatin. In such a setting, the selected enzymes are mixed with monomers/polymers and a cross-linking agent: after polymerization, the gel containing the enzymes can be mechanically processed to obtain beads or particles of other shapes that suit the decontamination process.

The solid support according to the invention can be used in a wide range of different settings. For example, the solid support can be packed in a column. Such a column can be installed within wastewater treatment plants to decontaminate wastewater and inactivate antibiotics before they reach the environment or can be appended to any treatment station to remediate antibiotics before the use or the rejection of water. In another setting, the solid support can be used in packed-bed reactors with environmental or waste waters to be treated flowing through the reactor and being in contact with immobilized enzymes. In such a packed-bed reactor, effluents can flow through successive different solid supports, each corresponding to one or multiple enzymes envisioned in the invention.

The solid support according to the invention can be used in enzymatic membrane reactors as described in Wichmann et al. (1981). Enzymes of the invention are immobilized on a membrane and the waters to be decontaminated are maintained in a reactor where continuous flowing or stirring bring them into contact with the membrane. The water that permeates through the membrane is depolluted by such a treatment.

For some enzymes of the invention, the antibiotic-inactivating reaction is preferably carried out in aerobic conditions. In such a case, a dioxygen source can be added to the previously described settings. For example, in fluidized-bed reactors or enzyme membrane reactors, air nozzles can be added to inject gas within the reaction chamber.

### Methods of the invention

The invention further provides a method for inactivating antibiotics in the environment, or in wastes before they reach the environment, comprising bringing into contact the environment setting or the waste to be treated with one or more enzymes that inactivate at least one antibiotic.

The invention further provides an enzymatic method for providing antibiotic decontamination in the environment, comprising bringing into contact the environment setting to be depolluted with one or more enzymes that inactivate at least one antibiotic.

The uses and methods of the invention are particularly useful for decontaminating environment settings like soils or waters.

The invention thus in particular relates to a method for the enzymatic treatment of an environment setting, comprising treating said environment setting with at least one enzyme selected in the group consisting of a laccase, a lipase or a cellulase, said selected enzyme being used alone or in combination with one or more other antibiotic-inactivating enzymes, thereby inactivating antibiotics present in said environment setting.

Waters to be depolluted can be surface waters like rivers, lakes, ground waters, underground waters or collected waters destined to human or animal use. Representative soils include industrial soils, farm soils or agricultural soils.

The uses and methods of the invention are also useful for decontaminating wastes that are polluted by antibiotic before they reach the environment. Accordingly, in a particular aspect, the invention relates to a method for the enzymatic remediation of waste material or effluent before it reaches the environment, comprising bringing said waste material or effluent into contact with at least one enzyme selected in the group consisting of a laccase (e.g., from *T. versicolor),* a lipase (e.g., from *Achromobacter spp.)* and a cellulase (e.g., from *Trichoderma reesei)* as defined above, said selected enzyme being used alone or in combination with one or more other antibiotic-inactivating enzymes, thereby inactivating antibiotics present in said waste material or effluent.

In a particular embodiment, wastes to be treated are industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical centre wastewater, nursing home wastewater, urban wastewater, collective wastewater, wastewater treatment plant effluents or agricultural manure.

In the uses and methods according to the invention, the antibiotic-inactivating enzyme(s) can be formulated in a composition as defined above.

In a particular embodiment, the enzymes that inactivate antibiotics are selected in the group consisting of the enzymes described above. The invention thus provides methods comprising implementation of one enzyme selected in the group consisting of a laccase, a cellulase, a ketoreductase, a lipase, a beta-lactamase, an erythromycin-esterase.

The enzymes can be formulated in liquid form. In one aspect of this embodiment, the enzyme(s) can be sprayable or delivered using a hosepipe or equivalent means (e.g., for dispensing the enzyme(s) to potentially contaminated soils, for example farm soils). The enzyme(s) can also be in liquid form and poured in the environment setting, for example in a container of a sewage treatment plant, or sprayed on contaminated manure or soils. In order to obtain optimal efficiency of the antibiotic inactivation when the enzyme(s) is(are) poured, it can be advantageous to ensure a homogeneous presence of the enzyme(s) within the setting to be treated. This can be achieved by mixing the enzyme(s) with the setting to be decontaminated. In another aspect of the invention, the composition can be diluted in wash solutions used for washing contaminated soils.

The enzyme(s) can also be in solid form. For example, the enzyme(s) can be comprised in a powder. The powder can be sprayed or poured on the environment setting to be treated.

In one aspect of this embodiment, the composition of the invention may be used to treat environmental waters or wastewaters. It had been shown that the optimal range of pH for the laccase enzyme of the composition is 5 to 7. In use, the composition of the invention can be added to batch reactors containing wastewaters or environmental waters to be treated after adjustment of their pH to the optimal pH of activity of the enzyme(s) used to inactivate antibiotics. Then, the antibiotic-inactivating enzyme is allowed to react for a time sufficient to inactivate the antibiotics.

Depending on the initial antibiotic concentration and enzyme concentration within the batch reactor, a "time sufficient to inactivate an antibiotic" can for example range from 5 minutes to 8 days, or 24 to 168 hours, or 5 minutes to 5 hours. Other kinetics can be envisioned within well-stirred reactors or continuously-stirred reactors.

An effective amount of enzyme(s) is used for inactivating antibiotics according to the invention. The terms "effective amount" denotes an amount suitable for inactivating the antibiotics present in the environment setting or waste material to be treated. These amounts can vary to a large extent depending on the concentration of the antibiotic, the activity of the enzyme, the temperature, etc. The person skilled in the art is able to adapt the amount of enzyme after having measured these parameters.

The amount of antibiotic-inactivating enzyme used in the methods of the present invention is preferably 0.0001 ― 10 000 000 000 U/liter or kilogram, preferably 0.001 ― 1 000 000 000 U/liter or kg and more preferably 0.01 ― 100 000 000 U/liter or kilogram of the environment setting or waste material to be treated. According to the present invention, one antibiotic-inactivating activity unit (1 U) is herein defined as the enzymatic activity to fully inactivate (100% inactivation) 1 pmol of the corresponding antibiotic in 1 minute at 22°C. This enzymatic activity can be measured with methods known to the man skilled in the art. One method is thoroughly described in the examples provided below.

The treatment can be executed at a temperature of 4°C to 45°C, in particular of 10°C to 30°C and typically around 20°C. When temperature decreases, incubation times may be increased to ultimately obtain the desired effective inactivation of antibiotics.

The previously described immobilized form of the composition can also be used in packed-bed reactors. For example, the substrate on which the enzyme is immobilized is stacked at the bottom of a reactor and the effluent to be decontaminated is forced to flow through the enzyme-containing substrate. The enzymes selected among the previously evoked list can be immobilized on different substrates therefore forming several layers of antibiotic-inactivating substrates in the packed-bed reactor. The effluent to be decontaminated flows through the different layers and undergoes sequential antibiotic inactivation. In this embodiment, the decontamination layers should be thick-enough to ensure a proper elimination of the contained antibiotics. In another setting, the same packed-bed reactor can be associated with a continuous-flow system to ensure multiple passages of the effluent through the decontamination substrate. After a sufficient time for inactivation, the decontaminated setting can be released in the environment.

In another embodiment of the invention, antibiotic-inactivating enzymes are immobilized on beads that are placed within a fluidized-bed reactor. Air nozzles ensure air injection at the bottom of the reactor and provoke the movement of the beads within the reactor. Therefore, the liquid setting to be decontaminated is brought in contact with the antibiotic-inactivating enzymes.

The present invention will be further understood with reference to the following nonlimiting examples.

### Examples

### Example 1: identification of a new property of laccase

### Preparation of solutions

Each solution is prepared independently and extemporaneously.

A fresh antibiotic solution is prepared into a buffered medium having pH value of about 7, preferably obtained with a phosphate buffer comprising 50mM mono- and disodium phosphate and 80mM NaCl. Each solution is prepared at a concentration 2-fold higher than the final antibiotic concentration in the enzymatic reaction assay.

The enzyme solutions are solubilized in a buffered medium having pH value of about 7, preferably obtained with a phosphate buffer comprising 50mM mono- and disodium phosphate and 80mM NaCl. Two enzymatic solutions were prepared at concentrations of 1 mg/ml and 5 mg/ml respectively.

### Incubation

The antibiotic and enzyme solutions are mixed in equal volumes. In parallel, samples without substrate or without enzyme are prepared and used as positive and negative controls.

The reaction is carried out at atmospheric pressure and ambient temperature (which is preferably between 20°C and 25°C) under mild agitation, for variable amounts of time usually ranging from 15 min to 7 days. Samples are withdrawn at various time points and assessed for their residual antibiotic activity as described below.

### Determination of the residual antibiotic activity of sample

The residual antibiotic activity of each sample is determined by a microbiological assay specific for each class of antibiotics based on the disc agar-diffusion method. The principle of this method consists in the inhibition of growth of a microorganism included in a solid medium by an antimicrobial agent which diffuses into the medium from a filter paper disc.

### Medium preparation

A Difco®, Becton-Dickinson medium is prepared according to the recommendations of the manufacturer. This medium is inoculated with a strain which is highly sensitive to the antimicrobial agent tested.

### Microbiological assay

The previous preparation is distributed in sterile plastic bacteriology plates (Nunc® 245x245 mm, Dominique Dutscher, ref. 055253). Paper discs (Dominique Dutscher, ref. 074074) impregnated with 20 µl of each sample are deposited on the plates (one disc by sample). 36 discs can be applied onto each plate. Experiments are carried out in triplicate.

The plates are incubated 18 hours at 37°C. The diameters of microbial growth inhibition are measured with an electronic ruler. The amount of antibiotic inactivated by the enzyme is assessed by comparison with a series of standards containing known amounts of active antibiotic incubated in the absence of enzyme. A sample with enzyme and no antibiotic is used to evaluate the possible interference of the enzymes in the microbiological assay.

In this example, the indicator bacterial strain sensitive to the said antibiotics (tetracycline, chlortetracycline, oxytetracycline, amoxicillin and imipenem) is *Bacillus subtilis* (CIP 52.62). All inactivation studies were performed with final antibiotic concentrations of 5.15 µg/mL. Laccase samples were obtained from Sigma Aldrich; they were used at concentrations of 5 mg/mL (referred as 'High concentration'), 2.5 mg/mL (referred as 'Medium concentration') or 0.5 mg/mL (referred as 'Low concentration'). The incubation of antibiotics with said enzymes was performed at ambient temperature, approximately 20°C.

Results for antibiotic-inactivation by laccases are summarized in the following table:

| **Enzymes** | | **Antibiotics** | | | | |
|---|---|---|---|---|---|---|
| **Laccases** | **Concentrations** | **Tetracycline** | **Oxytetracycline** | **Chlortetracycline** | **Amoxicillin** | **Imipenem** |
| | H | / | +++ in 24h | +++ in 24h | / | / |
| **from *Trametes versicolor*** | M | **+++ in 2h** | / | / | +++ in 24h | +++ in 168h |
| | L | +++ in 24h | +++ in 24h | +++ in 24h | +++ in 120h | +++ in 168h |
| **from *Trametes versicolor*** | H | +++ in 24h | +++ in 24h | +++ in 24h | / | / |
| **(cross-linked enzyme aggregate)** | L | +++ in 168h | +++ in 168h | +++ in 168h | / | / |
| **from *Rhus vernicifera*** | M | + in 5h | / | / | / | / |

| | | | | | | |
|---|---|---|---|---|---|---|
| **Legend** +++ : 100% inactivation = the residual concentration of antibiotic is smaller than the limit of detection of the microbiological test ++: 50-100% inactivation + : 25-50% inactivation -: <25% inactivation /: not tested H : High concentration of enzyme M : Medium concentration of enzyme L : Low concentration of enzyme | | | | | | |

In this study, the unexpected ability of laccases to inactivate antibiotics, and especially cyclines such as tetracycline, oxytetracycline and chlortetracycline is demonstrated. Both *T. versicolor* and R. *vernicifera* laccases elicit an activity against cycline antibiotics. We also demonstrate that *T. versicolor* laccase carries very good cycline-inactivating properties. Laccases are also shown to inactivate beta-lactam antibiotics such as amoxicillin or imipenem.

### Example 2: activity of laccase in river waters

The study described in the present example was conducted with a protocol similar to the one described in example 1: preparation of solutions, medium preparation and microbiological assays were performed accordingly.

The study described in example 1 was conducted with buffer solutions made in of ultra-pure laboratory quality water. The present invention is designed to be used to treat environmental waters and wastewaters before they reach the environment. Therefore, a similar study of the inactivation of antibiotics by laccases was performed with solutions made in river water.

In this study, waters used in solutions were sampled in Paris (France) from the Seine river, referred as river water 1 in the following, and the Canal Saint Martin, referred as river water 2 in the following. The protocol was similar to the one detailed above, except that all solutions were made in river waters.

In this example, the indicator bacterial strain sensitive to the said antibiotic (tetracycline) is *Bacillus subtilis* (CIP 52.62). All inactivation studies were performed with a final tetracycline concentration of 5.15 µg/mL. The enzyme concentrations were 2.5 mg/mL (referred as 'High concentration'), 1.5 mg/mL (referred as 'Medium concentration') and 0.5 mg/mL (referred as 'Low concentration'). The incubation of antibiotics with said enzymes was performed at ambient temperature, approximately 20°C.

Results for antibiotic-inactivation by laccase in river waters are summarized in the following table:

| **Enzyme** | | **Antibiotic** | |
|---|---|---|---|
| **Laccase** | **Concentrations** | **Tetracycline in river water 1** | **Tetracycline in river water 2** |
| | H | +++ in 24h | +++ in 24h |
| from *Trametes versicolor* | M | +++ in 24h | ++ in 24h |
| | L | + in 24h | + in 24h |

| | | | |
|---|---|---|---|
| **Legend** +++ : 100% inactivation = the residual concentration of antibiotic is smaller than the limit of detection of the microbiological test ++: 50-100% inactivation + : 25-50% inactivation -: <25% inactivation / : not tested H : High concentration of enzyme M : Medium concentration of enzyme L : Low concentration of enzyme | | | |

In this study, we demonstrate the ability of the laccase enzyme to inactivate antibiotics in river waters. The comparison with the results of example 1 shows that the quality of water has an impact on the enzymatic activity at low concentration of enzymes.

### Example 3: inactivation of macrolides by an erythromycin-esterase

The study described in the present example was conducted with a protocol similar to the one described in example 1: preparation of solutions, medium preparation and microbiological assays were performed accordingly.

Recombinant EreB erythromycin-esterase from *E. coli* was produced in E. coli and purified to near homogeneity by column chromatography (GTP Technology, Toulouse, France). It was used at a final concentration of 97 µg/mL in the experiments.

In this example, the indicator bacterial strain sensitive to the said macrolide antibiotics (erythromycin, clarithromycin and azithromycin) was *Micrococcus luteus* (CIP 53.45). All inactivation studies were performed with a final antibiotic concentration of 5.15 µg/mL. The incubation of antibiotics with said enzymes was performed at a temperature of 30°C.

Results for antibiotic-inactivation by erythromycin-esterase are summarized in the following table:

| **Enzymes** | | **Antibiotics** | | |
|---|---|---|---|---|
| **Erythromycin-esterase** | **Concentrations** | **Erythromycin** | **Clarithromycin** | **Azithromycin** |
| **ereB from *Escherichia coli*** | | +++ in 2h | +++ in 2h | +++ in 2h |

| | | | | |
|---|---|---|---|---|
| **Legend** +++ : 100% inactivation = the residual concentration of antibiotic is smaller than the limit of detection of the microbiological test ++: 50-100% inactivation + : 25-50% inactivation -: <25% inactivation / : not tested | | | | |

As expected, the EreB erythromycin-esterase is demonstrated to efficiently inactivate macrolide antibiotics under our experimental conditions.

### Example 4: inactivation of beta-lactam antibiotics by KRED reductases

In this example, the indicator bacterial strain sensitive to the said antibiotic (amoxicillin) was *Bacillus subtilis* (CIP 52.62). All inactivation studies were performed with a final antibiotic concentration of 5.15 µg/mL. KRED reductases were used at final concentrations of 2.5 mg/mL (referred as 'High concentration') and 0.5 mg/mL (referred as 'Low concentration'). They were obtained from Codexis. The incubation of antibiotics with said enzymes was performed at ambient temperature, approximately 20°C.
Results for antibiotic-inactivation by ketoreductases are summarized in the following table:

| **Enzymes** | | **Antibiotic** |
|---|---|---|
| **Keto-Reductases** | **Concentrations** | **Amoxicillin** |
| **KRED-NADH-101** | H | +++ in 168h |
| | L | +++ in 168h |
| **KRED-NADH-102** | H | +++ in 168h |
| | L | +++ in 168h |
| **KRED-NADH-108** | H | +++ in 168h |
| | L | +++ in 168h |
| **KRED-NADH-109** | H | +++ in 168h |
| | L | + in 168h |
| **KRED-NADH-110** | H | +++ in 168h |
| | L | +++ in 168h |
| **KRED-NADH-112** | H | +++ in 168h |
| | L | ++ in 168h |
| **KRED-NADH-113** | H | +++ in 168h |
| | L | - in 168h |
| **KRED-NADH-119** | H | +++ in 168h |
| | L | ++ in 168h |
| **KRED-NADH-126** | H | +++ in 168h |
| | L | +++ in 168h |

| | | |
|---|---|---|
| **Legend** +++ : 100% inactivation = the residual concentration of antibiotic is smaller than the limit of detection of the microbiological test ++: 50-100% inactivation + : 25-50% inactivation -: <25% inactivation / : not tested H : High concentration of enzyme L : Low concentration of enzyme | | |

The ability to inactivate beta-lactam antibiotics such as amoxicillin is demonstrated for several keto-reductases.

### Example 5: inactivation of antibiotics by lipases

In this example, the indicator bacterial strains sensitive to beta-lactam antibiotics (e.g. amoxicillin) and macrolide antibiotics were *Bacillus subtilis* (CIP 52.62) and *Micrococcus luteus* (CIP 53.45) respectively. All inactivation studies were performed with final antibiotic concentrations of 5.15 µg/. Lipases were used at final concentrations of 2.5 mg/mL (referred as 'High concentration') and 0.5 mg/mL (referred as 'Low concentration'); they were obtained from Codexis. The incubation of antibiotics with said enzymes was performed at ambient temperature, approximately 20°C.
Results for antibiotic-inactivation by lipases are summarized in the following table:

| **Enzymes** | | **Antibiotic** |
|---|---|---|
| **Lipases** | **Concentrations** | **Erythromycin** |
| **from *Achromobacter spp.*** | H | +++ in 72h |
| | L | - in 72h |

| | | |
|---|---|---|
| **Legend** +++ : 100% inactivation = the residual concentration of antibiotic is smaller than the limit of detection of the microbiological test ++: 50-100% inactivation + : 25-50% inactivation - : <25% inactivation / : not tested H : High concentration of enzyme L : Low concentration of enzyme | | |

| **Enzymes** | | **Antibiotic** |
|---|---|---|
| **Lipases** | **Concentrations** | **Amoxicillin** |
| **from *Alcaligenes spp.* AS2** | H | +++ in 168h |
| | L | +++ in 168h |
| **from Pseudomonas cepacia P1** | H | +++ in 168h |
| | L | +++ in 168h |
| **from Pseudomonas stutzeri** | H | +++ in 168h |
| | L | +++ in 168h |

| | | |
|---|---|---|
| **Legend** +++ : 100% inactivation = the residual concentration of antibiotic is smaller than the limit of detection of the microbiological test ++: 50-100% inactivation + : 25-50% inactivation - : <25% inactivation / : not tested H : High concentration of enzyme L : Low concentration of enzyme | | |

In this example, the ability of lipases to inactivate beta-lactam antibiotics (e.g. amoxicillin) and macrolide antibiotics (e.g. erythromycin) is shown.

### Example 6: inactivation of antibiotics by cellulases

In this example, the indicator bacterial strain sensitive to cycline antibiotics (e.g. oxytetracycline) was *Bacillus subtilis* (CIP 52.62). All inactivation studies were performed at a final antibiotic concentration of 5.15 µg/mL. Cellulases were obtained from Genencor as solutions. They were used in the antibiotic inactivation studies at final dilutions of 6 (referred as 'High concentration') and 20 (referred as 'Low concentration'). The incubation of antibiotics with said enzymes was performed at ambient temperature, approximately 20°C.

| **Enzymes** | | **Antibiotics** | | |
|---|---|---|---|---|
| **Cellulases** | **Concentrations** | **Tetracycline** | **Oxytetracycline** | **Chlortetracycline** |
| **from *Trichoderma reesei (CX40L)*** | H | +++ in 48h | + in 168h | + in 168h |
| | L | +++ in 168h | - in 168h | - in 168h |
| **from *Trichoderma reesei (CX53L)*** | H | +++ in 24h | + in 168h | ++ in 168h |
| | L | +++ in 72h | - in 168h | + in 168h |

| | | | | |
|---|---|---|---|---|
| Legend +++ : 100% inactivation = the residual concentration of antibiotic is smaller than the limit of detection of the microbiological test ++: 50-100% inactivation + : 25-50% inactivation - : <25% inactivation / : not tested H : High concentration of enzyme L : Low concentration of enzyme | | | | |

Both tested cellulase enzymes are demonstrated to inactivate at least partially macrolide antibiotics.

### Bibliography:

Arthur, M.; Andremont, A. & Courvalin, P. (1987), Distribution of erythromycin-esterase and rRNA methylase genes in members of the family Enterobacteriaceaehighly resistant to erythromycin, Antimicrob.Agents Chemother. 31 (3), 404--409.
Arthur, M.; Autissier, D. & Courvalin, P. (1986), Analysis of the nucleotide sequence of the ereB gene encoding the erythromycin-esterase type II, Nucleic Acids Res 14(12), 4987--4999.
Avnir D., Braun S., Lev O., Ottolenghi M. (1994), Enzymes and Other Proteins Entrapped in Sol-Gel Materials, Chem. Mater., 6 (10), pp 1605―1614.
Baldrian, P. (2006) Fungal laccases ― occurrences and properties. FEMS Microbiol Rev 30, 215-242
Baquero F, Martínez JL, and Cantón R. (2008) ;Antibiotics and antibiotic resistance in water environments.Curr Opin Biotechnol. Jun;19(3):260-265.
Barthelemy, P., Autissier, D., Gerbaud, G. and Courvalin, P. (1984) Enzymic hydrolysis of erythromycin by a strain of Escherichia coli. A new mechanism of resistance. J. Antibiotics 37, 1692-1696
Bailey J.E. and Ollis D.F., Applied enzyme catalysis, Biochemical Engineering fundamentals (2nd ed.), McGraw-Hill, New York, NY (1986) pp. 157―227
Bonnedahl, J.; Drobni, M.; Gauthier-Clerc, M.; Hernandez, J.; Granholm, S.; Kayser, Y.; Melhus, A.; Kahlmeter, G.; Waldenström, J.; Johansson, A. & Olsen, B. (2009), Dissemination of Escherichia coli with CTX-M type ESBL between humans and yellow-legged gulls in the south of France. PLoS One 4(6), e5958.
Boxall, A.B.A., Fogg, L.A., Baird, D.J., Lewis, C., Telfer, T.C., Kolpin, D., Gravell, A., (2005). Targeted monitoring study for veterinary medicines in the UK environment. Final Report to the UK Environment Agency.
Brad, L and Brzozowski, A.M. (1990). A serine protease triad forms the catalytic centre of a triglyceride lipase, Nature 343, pp 767-770.
Brockerhoff, H. and Jensen, R. (eds), Lipolytic Enzymes, Academic Press, New York, 1974, pp. 1―340.
Champagne P.P. (2010) Dye decolorization and detoxification by laccase immobilized on porous glass beads. Bioresource Technology 101, 2230-2235. Couto, SR and Herrera, JLT (2006) Industrial and biotechnological applications of laccases: a review. Biotechnol Adv 24, 500-513*.*
Davis S, and Burns G, (1990). Decolorization of phenolic effluents by soluble and immobilized phenol oxidases. Appl. Microbiol. Biotechnol. 32, 721―726.
Duran N, Rosa, M., D'Annibale, A. A,d Gianfreda, L. (2002) Applications of laccases and tyrosinases (phenoloxidases) immobilized on different supports: a review. Enzyme and Microbial Technology 31, 907-931.
Elemam A, Rahimian J, Mandell W. (2009) Infection with panresistant Klebsiella pneumoniae: a report of 2 cases and a brief review of the literature. Clin Infect Dis 49(2):271-4.
Faber, K., Biotransformations in organic chemistry, 4th Ed. Springer, Berlin Heidelberg New York. 2000.
Godfredson, S. E., in Microbial Enzymes and Biotechnology (eds Fogarty, W. M. and Kelly, E. T.), Elsevier Applied Sciences, The Netherlands, 1990, pp. 255―273.
Hasan, F, Shah AA, and Hameed A, (2006). Industrial applications of microbial lipases; Enzyme and Microbial Technology 39 (2), 235-251.
Frère JM, (1995) Beta-lactamases and bacterial resistance to antibiotics. Mol Microbiol. 16(3):385-95.
Godfrey T. and Reichelt J., Industrial applications, Industrial enzymology— applications of enzymes in industry, The Nature Press, London (1983) pp. 170―465
Grochulski, P. and Li, Y. (1993). Insights into interfacial activation from an open structure of Candida rugosa lipase. J Biol. Chem. 268, 12843-12847.
Han SJ, Chung JH, Cheong CS, Chung IY and Han YS (2004). Enhancement of lipase activity from Acinetobacter species SY-01 by random mutagenesis and the role of lipase-specific chaperone; Enzyme and Microbial Technology 35 (5,6), 377-384.
Hektoen, H.; Berge, J. A.; Hormazabal, V. & Yndestad, M. (1995), Persistence of antibacterial agents in marine sediments. Aquaculture 133(3-4), 175--184.
Huang AHC (1984). Studies on specificity of lipases . In: Borgstrom B, Brock-mann HL, editors. Lipases. Amsterdam: Elsevier pp. 419―42.
Hummel and Kula (1989) Dehydrogenases for the synthesis of chiral compounds. Eur. J. Biochem. 184:1-13
Jaeger KE and Reetz MT (1998). Microbial Lipases from versatile tools for biotechnology, TIBTECH 16, 396-403.
Joergensen, S.; Skov, K. W. Ans Diderichesen, B. (1991). Cloning, sequence, and expression of a lipase gene from Pseudomonas cepacia: lipase production in heterologous hosts requires two Pseudomonas genes. J. Bacteriol 173: 559-567.
Jolivalt C, Brenon S, Caminade E, Mougin C, and Pontié M (2000). Immobilization of laccase from Trametes versicolor on a modified PVDF microfiltration membrane: characterization of the grafted support and application in removing a phenylurea pesticide in wastewater. Journal of Membrane Science 180 (1), 103-113.
Kang ST and Rhee JS (1988) Effect of water on hydrolysis of olive oil by immobilized lipase in reverse phase system, Biotechnol. Lett. 10, 341- 348.
Kazlauskas, R. J. and Bornscheuer, U. T. (1998) in Biotechnology: Biotranformations with Lipases (Vol. 8).
Kimura Y, Tanaka A, Sonomoto K, Nihira T and Fukui S, (1983). Application of immobilized lipase to hydrolysis of triacyl glyceride, Eur. J. Appl. Microbiol. Biotechnol. 17, 107-112.
Klibanov AM (2001) Improving enzymes by using them in organic solvents. Nature 409, 241-246.
Koeller KM, and Wong C-H (2001): Enzymes for chemical synthesis. Nature 409, 232-240.
Kohno M, Enatsu M, Funatsu J, Yoshiizumi M and Kugimiya W (2001). Improvement of the optimum temperature of lipase activity for Rhizopus niveus by random mutagenesis and its structural interpretation. Journal of Biotechnology 87 (3), 203-210.
Kraus and Waldman, Enzyme catalysis in organic synthesis, Vols. 1 & 2, VCH Weinheim 1995.
Lawson, D. M., Brzozowski, A. M., Dodson, G.G. Hubbard, R. E., Huge-Jensen, B., Boel, E. and Derewenda, Z. S., in Lipases: their Structure, Biochemistry and Application (eds Woolley, P. and Petersen, S. B.), Cambridge University Press, UK, 1994, pp. 77―94.
Lemus, J. A.; Blanco, G.; Grande, J.; Arroyo, B.; García-Montijano, M. and Martínez, F. (2008) Antibiotics Threaten Wildlife: Circulating Quinolone residues an disease in Avian Scavengers, PLoS One 1, e1444.
Lu J, Nie K, Wang F and Tan T, (2008). Immobilized lipase Candida sp. 99-125 catalyzed methanolysis of glycerol trioleate: Solvent effect. Bioresource Technology, 99 (14), 6070-6074.
Mayer, A. M. & Staples, R. C. (2002) Laccase: new functions for an old enzyme. Phytochemistry, 60, 551-565
Morel, C and Mossialos, E (2010) Stoking the antibiotic pipeline. British Med J. 340:c2115
Levy SB., (1998). Multidrug resistance--a sign of the times. N Engl J Med. 338(19):1376-8.
Nguyen, N. T. K.; Ha, V.; Tran, N. V. T.; Stabler, R.; Pham, D. T.; Le, T. M. V.; van Doorn, H. R.; Cerdeño-Tárraga, A.; Thomson, N.; Campbell, J.; Nguyen, V. M. H.; Tran, T. T. N.; Pham, M. V.; Cao, T. T.; Wren, B.; Farrar, J. & Baker, S (2010).The sudden dominance of blaCTX-M harbouring plasmids in Shigella spp. Circulating in Southern Vietnam. PLoS Negl Trop Dis 4(6):e702.
Noble, M.E.M., Cleasby, A., Johnson, LN., Egmond, M.R. and Frenken, L.G.J. (1993). The crystal structure of triacylglycerol lipase from Pseudomonas glumae reveals a partially redundant catalytic aspartate. FEBS Lett. 331, pp 123-128.
Palomo JM, Ortiz C, Fuentes M, Fernandez-Lorente G, Guisan JM and Fernandez-Lafuente R (2004). Use of immobilized lipases for lipase purification via specific lipase―lipase interactions. Journal of Chromatography A, 1038 (1-2), 267-273.
Pierangela Ciuffreda, Silvana Casati, Angela Loseto and Enzo Santaniello (2003); Spectrophotometric Assay of Lipase Activity: A New 4-nitrophenyl Ester of a Dialkylglycerol Suitable as a Chromogenic Substrate of Pseudomonas cepacia Lipase. Biocatalysis and Biotransformation, Vol 21, pp123 ― 127.
Pleiss J, Fischer M, Peiker M, Thiele C and Schmid RD, (2000). Lipase engineering database Understanding and exploiting sequence―structure―function relationships; Journal of Molecular Catalysis B, 10, 491―508.
Reetz MT (2002). Lipases as practical biocatalysts, Current Opinion in Chemical Biology 6, 145―150.
Schrag, J.D., Li, Y., Wu, S. & Cygler, M. (1991). Ser-His-Glu forms the catalytic site of a lipase from Geotrichum candidum. Nature 351, pp 761-764.
Segura PA, François M, Gagnon C, Sauvé S.; Review of the occurrence of antiinfectives in contaminated wastewaters and natural and drinking waters.;Environ Health Perspect. 2009 May;117(5):675-84. Epub 2009 Jan 22.
Seitz, EW (1974). Industrial application of microbial lipases: A review ; Journal of the American Oil Chemists' Society 51 (2), 12-16.
Shlaes, DM, Projan SJ and Edwards Jr., JE (2004) Antibiotic Discovery: State of the State - Overcoming our vulnerability because of the downturn in corporate antibacterial R&D could depend on regulatory and legislative reforms. ASM News 70 (6), Y 275.
Tacconelli E, De Angelis G, Cataldo MA, Mantengoli E, Spanu T, Pan A, Corti G, Radice A, Stolzuoli L, Antinori S, Paradisi F, Carosi G, Bernabei R, Antonelli M, Fadda G, Rossolini GM and Cauda R. (2009). Antibiotic usage and risk of colonization and infection with antibiotic-resistant bacteria: a hospital population-based study. Antimicrob Agents Chemother. 53(10):4264-4269.
Thurston, C. (1994) The structure and function of fungal laccases. Microbiology 140, 19.
Torres, E.; Bustos-Jaimes, I. & Le Borgne, S. (2003) Potential use of oxidative enzymes for the detoxification of organic pollutants. Applied Catalysis B: 46, 1-15.
Wang Z, Fast W, Valentine AM, Benkovic SJ, (1999). Metallo-beta-lactamase: structure and mechanism, Curr Opin Chem Biol. 3(5),614-22.
White, J. S. and White, D. C., eds (1997) Source Book of Enzymes, CRC Press; 4.
Wichmann R, Wandrey C, Bückmann AF, and Kula MR. (1981).Continuous enzymatic transformation in an enzyme membrane reactor with simultaneous NAD(H) regeneration. Biotechnology and Bioengineering XXIII (12), 2789-2802.
Winckler, C. & Grafe, A. (2001), 'Use of veterinary drugs in intensive animal production', Journal of Soils and Sediments 1(2), 66--70.
Xi C, Zhang Y, Marrs CF, Ye W, Simon C, Foxman B, Nriagu J., (2009). Prevalence of antibiotic resistance in drinking water treatment and distribution systems.,Appl Environ Microbiol. 75(17):5714-5718.
Zaborsky, O. R. (1976) Immobilized enzymes--miscellaneous methods and general classification. Methods Enzymol, 44, 317-332

## Claims

1. Use of at least one enzyme selected in the group consisting of a laccase, a lipase and a cellulase, for inactivating one or several antibiotics.

2. The use according to claim 1, wherein:
- the enzyme is a laccase and the antibiotic is a cycline, in particular tetracycline, oxytetracycline or chlortetracycline, or a beta-lactam, in particular amoxicillin or imipenem; and/or
- the enzyme is a lipase and the antibiotic is a macrolide, in particular erythromycin, or a beta-lactam, in particular amoxicillin; and/or
- the enzyme is a cellulase and the antibiotic is a cycline, in particular tetracycline, oxytetracycline or chlortetracycline.

3. Use of at least one enzyme selected in the group consisting of a laccase, a lipase and a cellulase for antibiotic remediation in the environment or in waste.

4. The use according to any one of claims 1 to 3, wherein the laccase is a laccase, or mixture of laccases, from *Trametes versicolor.*

5. The use according to claim 3 or 4, wherein said at least one enzyme is used in combination with one or more other antibiotic-inactivating enzyme(s), preferably selected in the group consisting of a ketoreductase, a beta-lactamase and an erythromycin esterase.

6. A method for the enzymatic treatment of an environment setting, in particular soils or waters, comprising treating said environment setting with at least one enzyme selected in the group consisting of a laccase, a lipase and a cellulase, thereby inactivating antibiotics present in said environment setting.

7. The method according to claim 6, wherein said waters are surface waters such as rivers or lakes, ground waters, underground waters or collected waters, in particular drinking waters, waters destined to the agro-alimentary industry and waters destined to human or animal use.

8. The method according to claim 6, wherein said soils are industrial soils, farm soils or agricultural soils.

9. A method for the enzymatic remediation of waste material or effluent before it reaches the environment, comprising bringing said waste material or effluent into contact with at least one enzyme selected in the group consisting of a laccase, a lipase and a cellulase, alone or in combination with one or more antibiotic-inactivating enzymes, thereby inactivating antibiotics present in said waste material or effluent.

10. The method according to claim 9, wherein said waste material is wastewaters, in particular industrial wastewater, recycled process water, pharmaceutical plant wastewater, municipal wastewater, sanitary wastewater, sewage, farm wastewater, animal farm wastewater, fish farm wastewater, agricultural site wastewater, hospital wastewater, medical center wastewater, nursing home wastewater, urban wastewater, collective wastewater or wastewater treatment plant effluents.

11. The method according to any one of claims 6 to 10, wherein said laccase is from *T. versicolor.*

12. A composition comprising:
- at least one enzyme selected in the group consisting of a laccase, a lipase and a cellulase, and
- at least one other antibiotic inactivating enzyme.

13. A composition according to claim 12, wherein said other antibiotic-inactivating enzyme(s) is(are) selected in the group consisting of a ketoreductase, a beta-lactamase and an erythromycin esterase.

14. A solid support comprising immobilized thereon:
- at least one enzyme selected in the group consisting of a laccase, a lipase or a cellulase, alone or in combination with
- one or more other antibiotic-inactivating enzymes.

15. The solid support according to claim 14, wherein said other antibiotic-inactivating enzyme is selected in the group consisting of a ketoreductase, a beta-lactamase and an erythromycin esterase.
